# FASCICULE DE BREVET EUROPEEN

(11) **EP 0 466 580 B1**
(45) Date de publication et mention de la délivrance du brevet: **27.09.1995**
(21) Numéro de dépôt: 91401908.8
(22) Date de dépôt: 09.07.1991
(51) Int. Cl.: F42B 15/36, B64G 1/40

(54) **Structure d'extrémité avant d'un propulseur d'appoint monté sur le corps principal d'un lanceur**
Vorderteilstruktur einer auf dem Hauptkörper einer Trägerrakete befestigten Zusatzrakete
Forward end structure of a rocket booster mounted on the main body of a launcher

(30) Priorité: 11.07.1990 FR 9008827
(43) Date de publication de la demande: 15.01.1992
(73) Titulaire: AEROSPATIALE Société Nationale Industrielle, 75781 Paris Cédex 16 (FR)
(72) Inventeur: Demange, Claude, F-78300 Poissy (FR)
(74) Mandataire: Poulin, Gérard

(56) Documents cités:
- DE-A- 3 211 873
- GB-A- 696 751
- US-A- 2 960 034
- US-A- 4 452 412

## Description

L'invention concerne une structure d'extrémité avant d'un propulseur d'appoint, par exemple à poudre, prévu pour être monté latéralement sur le corps principal d'un lanceur.

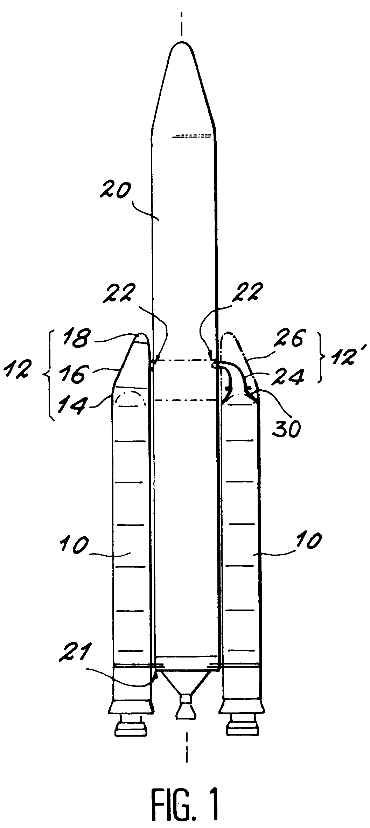

Comme on l'a représenté très schématiquement sur la moitié gauche de la figure 1, afin de monter des propulseurs d'appoint 10 latéralement sur le corps principal 20 d'un lanceur, on utilise habituellement deux liaisons 21 et 22 qui sont situées respectivement à l'arrière et à l'avant de chacun des propulseurs d'appoint. Ces liaisons doivent transmettre au corps principal du lanceur les efforts statiques que constituent les forces de poussée engendrées par les propulseurs d'appoint, tout en évitant de transmettre les efforts dynamiques correspondant aux vibrations des propulseurs d'appoint, et en autorisant la séparation et le largage de ces derniers lorsque leur action est terminée. Les dispositifs de liaison doivent en outre tenir compte des dilatations différentielles qui se produisent entre le corps principal du lanceur et les propulseurs d'appoint lors du fonctionnement de ces derniers.

Dans la pratique ces différentes fonctions sont réalisées en reliant l'arrière de chacun des propulseurs d'appoint 10 au corps principal 20 du lanceur par un dispositif d'accrochage rigide 21 comprenant par exemple un système de bielles, et en reliant l'avant de chaque propulseur d'appoint au corps principal du lanceur par un dispositif d'accrochage à rotule 22 qui assure la reprise de l'effort de poussée.

De façon plus précise, la structure d'extrémité avant 12 par laquelle l'enveloppe du réservoir de chacun des propulseurs d'appoint 10 est reliée au corps principal 20 du lanceur au travers du dispositif d'accrochage avant 22, comprend un cylindre 14 coupé obliquement sur sa face avant et un cône 16 prolongeant cette face avant du cylindre et terminé par une calotte sphérique 18. L'axe du cône 16 est, par exemple, incliné d'environ 12° vers le corps principal du lanceur, par rapport à l'axe du propulseur d'appoint. A l'exception de la calotte sphérique 18, la structure d'extrémité avant 12 est entièrement métallique. De plus, elle est d'une réalisation très complexe. En effet, elle comprend une peau unique d'épaisseur variable dans sa partie avant, deux peaux reliées par des raidisseurs dans sa partie arrière, et des cadres raidisseurs y sont incorporés pour parfaire sa rigidité.

Le caractère lourd et particulièrement complexe de la structure avant 12 utilisée actuellement s'explique notamment par le fait que cette structure doit posséder, pour des considérations de dynamique de l'ensemble du lanceur, une forte rigidité suivant ses trois axes. Elle doit en outre supporter à la fois les charges aérodynamiques qui lui sont appliquées lors du vol et la charge mécanique provenant de la transmission de l'effort de poussée entre le corps 20 du lanceur et le propulseur d'appoint 10, au travers du dispositif d'accrochage avant 22. Le surdimensionnement de la structure entraîne une augmentation du poids de l'ensemble du lanceur conduisant à une réduction appréciable de la charge utile que peut emporter ce dernier.

Par ailleurs, toute modification dans les caractéristiques des propulseurs d'appoint nécessite de recalculer complètement la structure d'extrémité avant 12.

On connaît du document DE-A-3 211 873 sur lequel se base le préambule de la revendication indépendante 1, une structure dans laquelle l'extrémité avant d'un propulseur d'appoint est reliée au dispositif d'accrochage du lanceur par une pièce indépendante du carénage entourant cette pièce.

L'invention a précisément pour objet une structure d'extrémité avant d'un propulseur d'appoint, dont la conception nouvelle et originale permet de réduire le poids de cette structure, ce qui autorise une augmentation de la charge utile emportée par le lanceur, cette nouvelle structure d'extrémité étant en outre plus facile à modifier que la structure existante, dans le cas d'un changement dans les caractéristiques du propulseur d'appoint.

Conformément à l'invention, ce résultat est obtenu au moyen d'une structure d'extrémité avant d'un propulseur d'appoint, apte à être reliée au corps principal d'un lanceur par un dispositif d'accrochage aval, cette structure comprenant une pièce reliant mécaniquement le dispositif d'accrochage avant à l'extrémité avant du propulseur d'appoint, et une coiffe de protection aérodynamique fixée à l'extrémité avant du propulseur d'appoint et entourant la pièce, sans liaison mécanique rigide avec cette dernière, caractérisée par le fait que la pièce est une potence arquée.

Dans la structure ainsi définie, les charges aérodynamiques et thermiques sont supportées en totalité par la coiffe de protection, alors que la charge mécanique est supportée en totalité par la potence arquée. La dissociation de ces fonctions permet de simplifier la structure et de réduire son poids, ce qui conduit à augmenter la charge utile emportée par le lanceur. De plus, en cas de changement de caractéristiques du propulseur d'appoint, les modifications à apporter à la structure sont grandement simplifiées par rapport aux structures existantes.

Dans un mode de réalisation préféré de l'invention, la potence arquée présente un axe d'inertie incurvé dont une première extrémité est normale à la surface du corps principal et dont la deuxième extrémité est tangente à un axe d'inertie du propulseur d'appoint, la potence arquée ayant une section circulaire centrée sur son axe d'inertie et dont le diamètre augmente progressivement de la première extrémité vers la deuxième extrémité.

Avantageusement, le diamètre de la deuxième extrémité de la potence arquée est sensiblement égal à la moitié du diamètre du propulseur d'appoint, une jupe de liaison cylindro-conique reliant cette deuxième extrémité à l'extrémité avant du propulseur d'appoint.

Cette jupe de liaison cylindro-conique peut être réalisée en alliage métallique léger, alors que la potence arquée, qui est de préférence creuse et présente des cadres de renforcement répartis sur toute sa longueur, est avantageusement réalisée en matériau composite.

Afin de garantir l'indépendance entre la coiffe et la potence arquée, l'extrémité de cette dernière adjacente au lanceur traverse la coiffe de protection par l'intermédiaire d'un joint souple d'étanchéité.

Un mode de réalisation préféré de l'invention va à présent être décrit, à titre d'exemple non limitatif, en se référant aux dessins annexés, dans lesquels :
- la figure 1 est une vue représentant schématiquement un lanceur équipé de deux propulseurs d'appoint, le propulseur illustré sur la gauche de la figure comportant une structure d'extrémité avant selon la technique antérieure, alors que le propulseur illustré sur la droite de la figure comporte une structure d'extrémité avant conforme à l'invention ; et
- la figure 2 est une vue en coupe partielle représentant à plus grande échelle la structure d'extrémité avant selon l'invention.

Comme on l'a représenté très schématiquement sur la droite de la figure 1, un propulseur d'appoint 10 tel qu'un propulseur à poudre, monté sur le corps principal 20 d'un lanceur, est muni conformément à l'invention d'une structure d'extrémité avant 12′ comprenant une potence arquée 24 et une coiffe de protection aérodynamique 26. La potence arquée 24 est prolongée, du côté du propulseur d'appoint 10, par une jupe cylindro-conique 30.

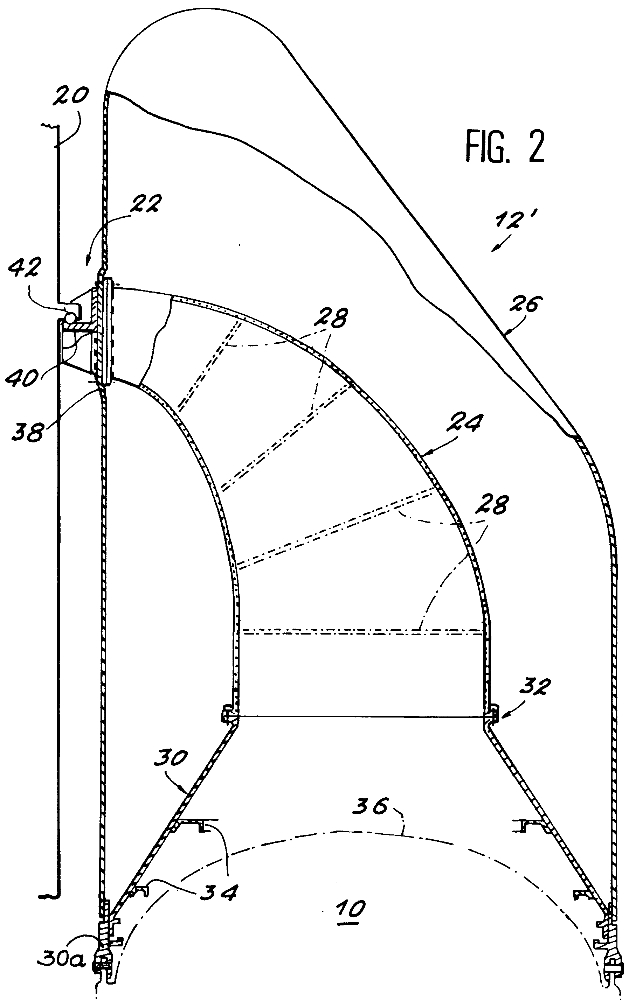

La potence arquée 24 et la jupe cylindro-conique 30 assurent la liaison mécanique entre l'enveloppe 36 (figure 2) du réservoir du propulseur d'appoint 10 et le corps principal 20 du lanceur, par l'intermédiaire du dispositif d'accrochage avant 22 de ce propulseur d'appoint. Elle assure, par conséquent, la transmission des efforts mécaniques dus à la poussée du propulseur d'appoint 10, entre ce propulseur et le corps principal 20 du lanceur.

La coiffe de protection aérodynamique 26 est fixée quant à elle à l'enveloppe 36 (figure 2) du réservoir du propulseur d'appoint 10 et elle est placée autour de la potence arquée 24, sans liaison mécanique rigide avec cette dernière, de façon à supporter les efforts aérodynamiques et thermiques engendrés lors du vol.

Comme l'illustre plus précisément la figure 2, la potence arquée 24 est constituée par une poutre creuse, qui présente un axe d'inertie incurvé dont une première extrémité, reliée au corps principal 20 du lanceur par le dispositif d'accrochage avant 22, est normale à la surface du corps principal 10 du lanceur. La deuxième extrémité de l'axe d'inertie de la potence arquée 24, qui est fixée à l'enveloppe 36 du réservoir du propulseur d'appoint, est tangente à l'axe d'inertie du propulseur d'appoint 10.

De plus, la potence arquée 24 présente une section circulaire centrée sur son axe d'inertie incurvé et dont le diamètre augmente progressivement de sa première extrémité reliée au corps principal 20 du lanceur jusqu'à sa deuxième extrémité fixée sur l'enveloppe 36. Cette forme donnée à la potence 24 permet de transformer progressivement les contraintes de cisaillement dues à l'effort exercé entre le propulseur d'appoint et le corps principal du lanceur lors de l'actionnement du propulseur d'appoint, en contraintes de flexion puis en contraintes de compression et de flexion.

La potence arquée 24 est avantageusement réalisée en un matériau composite, constitué par exemple de fibres de carbone noyées dans une résine. Cette structure est renforcée, dans l'exemple de réalisation illustré sur la figure 2, par des cadres de renforcement 28 répartis sur toute sa longueur.

L'extrémité de plus grand diamètre de la potence arquée 24 présente un diamètre avantageusement égal à environ la moitié du diamètre du réservoir du propulseur d'appoint 10. De plus, cette extrémité est reliée à l'enveloppe du réservoir du propulseur d'appoint 10 par la jupe de liaison cylindro-conique 30. La liaison entre la potence arquée 24 et la jupe cylindro-conique 30 est assurée par des brides boulonnées comme on l'a représenté en 32 sur la figure 2. La jupe 30 peut notamment être réalisée en alliage métallique léger et, comme la potence arquée 24, elle est renforcée intérieurement par des cadres 34.

Le diamètre de la jupe cylindro-conique 30 augmente depuis la potence arquée 24 jusqu'à l'enveloppe 36 du réservoir du propulseur d'appoint 10, à la périphérie de laquelle une partie cylindrique 30a de la jupe 30 est fixée, par exemple par des pions. Cet agencement permet de libérer l'espace occupé par le fond avant du réservoir du propulseur d'appoint 10.

Comme l'illustre la figure 2, la coiffe de protection aérodynamique 26 est également fixée sur la partie cylindrique 30a de la jupe cylindro-conique 30, par exemple par des rivets.

La forme de la coiffe de protection aérodynamique 26 est déterminée de façon classique en fonction du comportement aérodynamique de celle-ci au cours du vol. Elle peut notamment comporter une partie arrière cylindrique et une partie avant conique, d'axe incliné par exemple d'environ 12° vers le corps principal 20 du lanceur, l'extrémité avant de la coiffe étant fermée par une calotte sphérique. La coiffe 26 entoure totalement la potence arquée 24 et la jupe cylindro-conique 30, à l'exception de l'extrémité de la potence arquée qui est fixée par le dispositif d'accrochage avant 22 sur le corps principal 20 du lanceur. Cette extrémité de la potence arquée 24 traverse la coiffe 26 par l'intermédiaire d'un joint souple 38. Cette configuration permet de supprimer toute liaison mécanique rigide entre la potence arquée 24 et la coiffe 26, de façon à garantir l'indépendance mécanique de ces deux pièces.

Comme on l'a représenté très schématiquement sur la figure 2, l'extrémité de la potence arquée 24 adjacente au corps principal 20 du lanceur porte une ferrure 40 avec laquelle coopère une rotule 42 liée au corps principal 20, pour former le dispositif d'accrochage avant 22. Ce dispositif présente une structure classique et ne fait pas partie de l'invention.

La coiffe de protection aérodynamique 26 peut être réalisée avantageusement en un matériau composite à base de fibres de Kevlar (marque déposée). Dans la structure d'extrémité du propulseur d'appoint 10 conforme à l'invention, la coiffe 26 supporte les efforts aérodynamiques exercés sur la structure lors du vol du lanceur, alors que la potence arquée 24 et la jupe cylindro-conique 30 supportent les efforts mécaniques dus à la poussée du propulseur d'appoint 10. Etant donné qu'elles sont recouvertes par la coiffe 26, la potence 24 et la jupe 30 sont protégées des effets thermiques en vol. Il n'y a donc pas de réduction de leur résistance mécanique avec la température.

Cette dissociation des fonctions permet de simplifier la structure et, par conséquent, d'en réduire le poids. En conséquence, la charge utile emportée par le lanceur peut être augmentée.

Dans le cas où des évolutions dans la structure du propulseur d'appoint nécessiteraient des modifications de la structure d'extrémité de ce propulseur, la conception nouvelle conforme à l'invention permet de faire évoluer plus facilement, parce que séparément, les différents éléments de cette structure. Par exemple, la forme conique de la coiffe peut être changée en une forme ogivale ou autre, sans que la forme et les dimensions de la potence arquée ne soient modifiées.

En outre, la séparation des fonctions permet de rendre la potence arquée et la jupe cylindro-conique insensibles aux fluctuations des efforts aérodynamiques et à leur moment, ce qui se traduit, pour elles, par moins de vibrations.

Par ailleurs, les déformations de la coiffe dues aux efforts aérodynamiques ne s'ajoutent pas aux déformations de la potence et de la jupe cylindro-conique, mesurées au niveau du dispositif d'accrochage avant 22 et qui sont dues à la poussée du moteur à poudre, ce qui confère à la structure selon l'invention une rigidité globale supérieure à la structure existante.

Bien entendu, l'invention n'est pas limitée au mode de réalisation qui vient d'être décrit à titre d'exemple, mais en couvre toutes les variantes prévues dans les revendications de 1 à 8 suivantes. Ainsi, comme on vient de le voir, la forme donnée à la coiffe peut être modifiée sans sortir du cadre de l'invention. Il en est de même des dimensions de la potence arquée, qui peuvent être modifiées en fonction des efforts à transmettre. En outre, si la potence est avantageusement réalisée en matériau composite, elle peut aussi dans certains cas être réalisée en un alliage métallique léger. Inversement, la jupe 30 peut aussi être réalisée en matériau composite. La rigidité de la potence arquée 24 peut, si nécessaire, être renforcée, par exemple au moyen de raidisseurs axiaux ou d'une âme. De même, la rigidité de la jupe cylindro-conique peut être renforcée au moyen de raidisseurs axiaux, à section en forme d'oméga.

## Revendications

1. Structure d'extrémité avant d'un propulseur d'appoint, apte à être reliée au corps principal d'un lanceur par un dispositif d'accrochage avant (22), cette structure comprenant une pièce (24) reliant mécaniquement le dispositif d'accrochage avant (22) à l'extrémité avant du propulseur d'appoint, et une coiffe de protection aérodynamique (26) fixée à l'extrémité avant du propulseur d'appoint et entourant la pièce, sans liaison mécanique rigide avec cette dernière, caractérisée par le fait que la pièce (24) est une potence arquée.

2. Structure selon la revendication 1, caractérisée par le fait que la potence arquée (24) présente un axe d'inertie incurvé dont une première extrémité est normale à la surface du corps principal du lanceur et dont la deuxième extrémité est tangente à un axe d'inertie du propulseur d'appoint, la potence arquée ayant une section circulaire centrée sur son axe d'inertie et dont le diamètre augmente progressivement de la première extrémité vers la deuxième extrémité.

3. Structure selon la revendication 2, caractérisée par le fait que le diamètre de la deuxième extrémité de la potence arquée (24) est sensiblement égal à la moitié du diamètre du propulseur d'appoint, une jupe de liaison cylindro-conique (30) reliant cette deuxième extrémité à l'extrémité avant du propulseur d'appoint.

4. Structure selon la revendication 3, caractérisée par le fait que la jupe de liaison cylindro-conique (30) est réalisée en alliage métallique léger.

5. Structure selon la revendication 3, caractérisée par le fait que la jupe de liaison cylindro-conique (30) est réalisée en matériau composite.

6. Structure selon l'une quelconque des revendications précédentes, caractérisée par le fait que la potence arquée (24) est réalisée en matériau composite.

7. Structure selon l'une quelconque des revendications précédentes, caractérisée par le fait que l'extrémité de la potence arquée (24) adjacente au lanceur traverse la coiffe de protection (26) par l'intermédiaire d'un joint souple d'étanchéité (38).

8. Structure selon l'une quelconque des revendications précédentes, caractérisée par le fait que la potence arquée (24) est creuse et présente des cadres de renforcement (28) répartis sur toute sa longueur.

## Claims

1. Booster rocket front end structure which can be connected to the main body of a launcher by a front fastening device (2), said structure comprising a part (24) mechanically connecting the front fastening device (22) to the front end of the booster rocket and an aerodynamic protection cover (26) fixed to the front end of the booster rocket and surrounding the part (24), without any rigid mechanical connection to the latter, characterized in that the part is a curved support arm.

2. Structure according to claim 1, characterized in that the curved support arm (24) has an inwardly curved axis of inertia whereof a first end is perpendicular to the surface of the main launcher body and whose second end is tangential to an axis of inertia of the booster rocket, the curved support arm having a circular section centred on its axis of inertia and whose diameter progressively increases from the first end to the second end.

3. Structure according to claim 2, characterized in that the diameter of the second end of the curved support arm (24) is substantially equal to half the diameter of the booster rocket, a cylindroconical linking skirt (30) connecting said second end to the front end of the booster rocket.

4. Structure according to claim 3, characterized in that the cylindroconical linking skirt (30) is made from a light metallic alloy.

5. Structure according to claim 3, characterized in that the cylindroconical linking skirt (30) is made from a composite material.

6. Structure according to any one of the preceding claims, characterized in that the curved support arm (24) is made from a composite material.

7. Structure according to any one of the preceding claims, characterized in that the end of the curved support arm (24) adjacent to the launcher traverses the protective cover (26) via a flexible seal (38).

8. Structure according to any one of the preceding claims, characterized in that the curved support arm (24) is hollow and has reinforcing frames (28) distributed over its entire length.

## Patentansprüche

1. Vordere Endkonstruktion eines Zusatztriebwerkes, die mit Hilfe einer vorderen Aufhängevorrichtung (22) mit dem Hauptrumpf einer Trägerrakete verbunden werden kann, wobei diese Konstruktion ein Teil (24), mit Hilfe dessen die vordere Aufhängevorrichtung (22) mit dem vorderen Ende des Zusatztriebwerkes verbunden wird, sowie eine aerodynamische Schutzhaube (26) besitzt, die an dem vorderen Ende des Zusatztriebwerkes befestigt ist und das genannte Teil umgibt, ohne mit letzterem mechanisch starr verbunden zu sein, dadurch gekennzeichnet, daß das Teil (24) ein gekrümmter Ausleger ist.

2. Konstruktion noch Anspruch 1, dadurch gekennzeichnet, daß der gekrümmte Ausleger (24) eine gekrümmte Trägheitsachse aufweist, von der ein Ende senkrecht zur Oberfläche des Hauptrumpfes der Trägerrakete steht und deren anderes Ende tangential zur Trägheitsachse des Zusatztriebwerkes verläuft, wobei der gekrümmte Ausleger einen runden Querschnitt besitzt, der in bezug auf dessen Trägheitsachse zentriert ist, und dessen Durchmesser ausgehend von dem ersten Ende in Richtung des zweiten Endes allmählich zunimmt.

3. Konstruktion nach Anspruch 2, dadurch gekennzeichnet, daß der Durchmesser des zweiten Endes des gekrümmten Auslegers (24) annähernd der Hälfte des Durchmessers des Zusatztriebwerkes entspricht, wobei dieses zweite Ende mit dem vorderen Ende des Zusatztriebwerkes über einen zylindrischkonischen Verbindungsmantel (30) verbunden ist.

4. Konstruktion nach Anspruch 3, dadurch gekennzeichet, daß der zylindrisch-konische Verbindungsmantel (30) aus einer Leichtmetall-Legierung gefertigt wird.

5. Konstruktion nach Anspruch 3, dadurch gekennzeichnet, daß der zylindrisch-konische Verbindungsmantel (30) aus Verbundmaterial gefertigt wird.

6. Konstruktion nach einem der vorangegangenen Ansprüche, dadurch gekennzeichnet, daß der gekrümmte Ausleger (24) aus Verbundmaterial gefertigt wird.

7. Konstruktion nach einem der vorangegangenen Ansprüche, dadurch gekennzeichnet, daß das Ende des gekrümmten Auslegers (24), das sich neben der Trägerrakete befindet, die Schutzhaube (26) mit Hilfe einer elastischen Dichtung (38) durchquert.

8. Konstruktion nach einem der vorangegangenen Ansprüche, dadurch gekennzeichnet, daß der gekrümmte Ausleger (24) hohl ist und Verstärkungsrahmen (28) besitzt, die über dessen gesamte Länge verteilt sind.
